# EUROPÄISCHE PATENTSCHRIFT

(11) **EP 2 119 118 B1**
(45) Veröffentlichungstag und Bekanntmachung des Hinweises auf die Patenterteilung: **30.11.2011**
(21) Anmeldenummer: 08701401.5
(22) Anmeldetag: 10.01.2008
(51) Int. Cl.: H04W 16/14

(54) **FUNKNETZ UND VERFAHREN ZUR DATENÜBERTRAGUNG IN EINEM FUNKNETZ**
RADIO NETWORK AND METHOD FOR TRANSMITTING DATA IN A RADIO NETWORK
RÉSEAU DE RADIOCOMMUNICATION ET PROCÉDÉ POUR TRANSFÉRER DES DONNÉES DANS UN RÉSEAU DE RADIOCOMMUNICATION

(30) Priorität: 07.02.2007 DE 102007006159
(43) Veröffentlichungstag der Anmeldung: 18.11.2009
(73) Patentinhaber: Siemens Aktiengesellschaft, 80333 München (DE)
(72) Erfinder: ZIEGLER, Christian, A-1220 Wien (AT); BRANDSTETTER, Josef, A-1150 Wien (AT)
(86) Internationale Anmeldenummer: PCT/EP2008/050255
(87) Internationale Veröffentlichungsnummer: WO 2008/095746

(56) Entgegenhaltungen:
- EP-A- 1 124 347
- EP-A- 1 411 675
- DE-A1- 19 946 540
- MANGOLD S ET AL: "Coexistence of IEEE 802.11a and ETSI BRAN Hiperlan/2: the problem of fair resource sharing in the license exempt band at 5 GHz" IEEE INTERNATIONAL CONFERENCE ON THIRD GENERATION WIRELESSCOMMUNICATIONS, XX, XX, 14. Juni 2000 (2000-06-14), Seiten 1-8, XP002229523

## Beschreibung

Die Erfindung betrifft ein Funknetz mit Daten übertragenden Geräten, die für die Dauer der Datenübertragung einen von mehreren verfügbaren Frequenzkanälen belegen, und mit einer Überwachungseinrichtung, die in Pausen zwischen den einzelnen Datenübertragungen den benutzten Frequenzkanal zusätzlich belegt.

Die Erfindung betrifft ferner ein Verfahren zur Datenübertragung in einem Funknetz, wobei Daten übertragende Geräte des Funknetzes für die Dauer der Datenübertragung einen von mehreren verfügbaren Frequenzkanälen belegen und in Pausen zwischen den einzelnen Datenübertragungen der benutzte Frequenzkanal zusätzlich belegt wird.

Ein derartiges Funknetz bzw. ein derartiges Verfahren sind aus der DE 199 46 540 A1 bekannt.

In vielen Bereichen wie z. B. in der Industrie, Wissenschaft und Medizin kommen in zunehmendem Maße selbstorganisierende Funknetze und Netze ohne Infrastruktur, sogenannte Ad-hoc-Netze, zum Einsatz. Ein bekanntes Beispiel für derartige Netze ist das drahtlose lokale Netz (Wireless Local Area Network - WLAN) nach dem Standard IEEE 802.11. Dabei können an beliebigen Orten Funkverbindungen zwischen Geräten (Stationen) aufgebaut werden, ohne von fest installierten Basisstationen oder einer festgelegten Funknetzplanung abhängig zu sein. Verbindungen von einer Station zu einer Zielstation können entweder direkt oder mittels Relaisstationen über eine Vielzahl möglicher Wege realisiert werden. Für die Kommunikation steht ein begrenzter Frequenzbereich mit einer vorgegebenen Anzahl von Frequenzkanälen zur Verfügung, von denen wiederum nur eine geringere Anzahl gleichzeitig überlappungsfrei genutzt werden kann.

Um einen Frequenzkonflikt bei benachbarten oder sich räumlich überlappenden Funknetzen zu vermeiden, ist es bekannt, im Falle eines neu zu bildenden Funknetzes durch Abhören der verfügbaren Frequenzkanäle festzustellen, welche von ihnen bereits belegt sind, um anhand dessen einen freien Frequenzkanal auswählen zu können. Neu aktivierte Geräte können aber die Belegung eines Frequenzbandes nicht feststellen, wenn zum Zeitpunkt ihrer Aktivierung auf dieser Frequenz gerade keine Datenübertragung stattfindet.

Aus diesem Grund ist bei dem aus der eingangs genannten DE 199 46 540 A1 bekannten Funknetz bzw. Verfahren vorgesehen, den benutzten Frequenzkanal in den Pausen zwischen einzelnen Datenübertragungen zusätzlich, beispielsweise durch ein Burst-Signal, zu belegen, um Geräten eines anderen Funknetzes die Belegung des Frequenzkanals zu signalisieren. Insbesondere wenn Daten nur sporadisch bzw. in größeren Zeitabständen übertragen werden, ist jedoch diese bekannte Art der zusätzlichen Belegung des Frequenzkanals mit einem relativ hohen Energieverbrauch verbunden.

Aus der EP 1 124 347 A2 ist es bekannt, dass ein Mobilgerät, das einen Frequenzkanal benutzen möchte, in einem vorgegebenen Zeitintervall Zutrittssignale aussendet. Eine Basisstation sucht in diesen Zeitintervallen nach Zutrittssignalen, wobei die Detektion eines Zugriffssignals den Versuch der Kanalbelegung durch ein Mobilgerät anzeigt.

Um das mit der bekannten Art der zusätzlichen Belegung des Frequenzkanals verbundene Problem des relativ hohen Energieverbrauchs zu lösen, ist gemäß der Erfindung vorgesehen, dass bei dem Funknetz der eingangs angegebenen Art die Überwachungseinrichtung dazu ausgebildet ist, den belegten Frequenzkanal auf den Versuch einer Belegung durch ein nicht zu dem Funknetz gehörendes Gerät zu überwachen und die zusätzliche Belegung des Frequenzkanals in Abhängigkeit von der Detektion eines solchen Versuchs vorzunehmen.

Für das Verfahren der eingangs genannten Art wird die Aufgabe in entsprechender Weise dadurch gelöst, dass der belegte Frequenzkanal auf den Versuch einer Belegung durch ein nicht zu dem Funknetz gehörendes Gerät überwacht wird und die zusätzliche Belegung des Frequenzkanals in Abhängigkeit von der Detektion eines solchen Versuchs erfolgt.

Die zusätzliche Belegung des für die Datenübertragung benutzten Frequenzkanals erfolgt also nur dann, wenn ein nicht zu dem Funknetz gehörendes Gerät versucht, diesen Frequenzkanal zu belegen und dieser Versuch detektiert wird. Das erfindungsgemäße Verfahren ist daher insbesondere für solche Funknetze von Vorteil, in denen Daten nur sporadisch bzw. in größeren Zeitabständen übertragen werden.

Die zusätzliche Belegung des Frequenzkanals durch das bestehende Netzwerk kann beispielsweise dadurch erfolgen, dass eine Folge von Daten an eine im bestehenden Funknetz nicht vorhandene Adresse gesandt wird oder dass Daten in Form von Broadcasts versendet werden und diese von allen im Funknetz befindlichen Routern (Relaisstationen) weitergeleitet werden, so dass dadurch eine zusätzliche Belegung des Frequenzkanals verursacht wird. Ergänzend kann während der Erhöhung der Belegung die Sendeleistung erhöht werden. Die Sendeleistung kann insbesondere auch dann erhöht werden, wenn während einer Datenübertragung zwischen den Geräten des Funknetzes der Versuch einer Belegung des Frequenzkanals durch ein Fremdgerät detektiert wird, weil z. B. die ursprüngliche Sendeleistung nicht ausreichend hoch war, um dem Fremdgerät die Belegung des Frequenzkanals zu signalisieren.

Die Überwachung des Frequenzkanals des bestehenden Netzes kann permanent oder zeitlich auf die Pausen zwischen einzelnen Datenübertragungen beschränkt erfolgen, wenn neu aktivierte Geräte die Belegung des Frequenzbandes nicht feststellen können. Die Überwachung des Frequenzkanals des bestehenden Netzes und/oder die Erhöhung der Belegung des Frequenzkanals können durch alle oder einzelne Geräte des bestehenden Netzes oder durch extra dafür vorgesehene separate Geräte erfolgen.

Zur weiteren Erläuterung der Erfindung wird im Folgenden auf die Figuren der Zeichnung Bezug genommen; im Einzelnen zeigen:
- Figur 1: ein Ausführungsbeispiel zweier sich örtlich überlappender Funknetze und
- Figur 2: ein Beispiel für den Ablauf des erfindungsgemäßen Verfahrens.

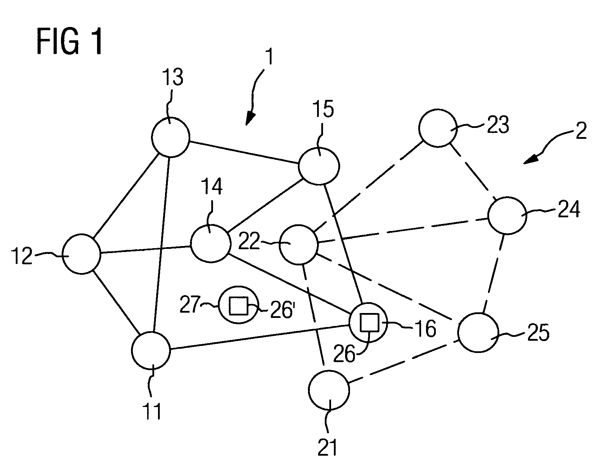

Figur 1 zeigt in stark schematisierter Weise ein erstes Funknetz 1 bestehend aus miteinander in einem Frequenzkanal x kommunizierenden Geräten 11 bis 16 und ein zweites neu zu bildendes Funknetz 2 mit den Geräten 21 bis 25.

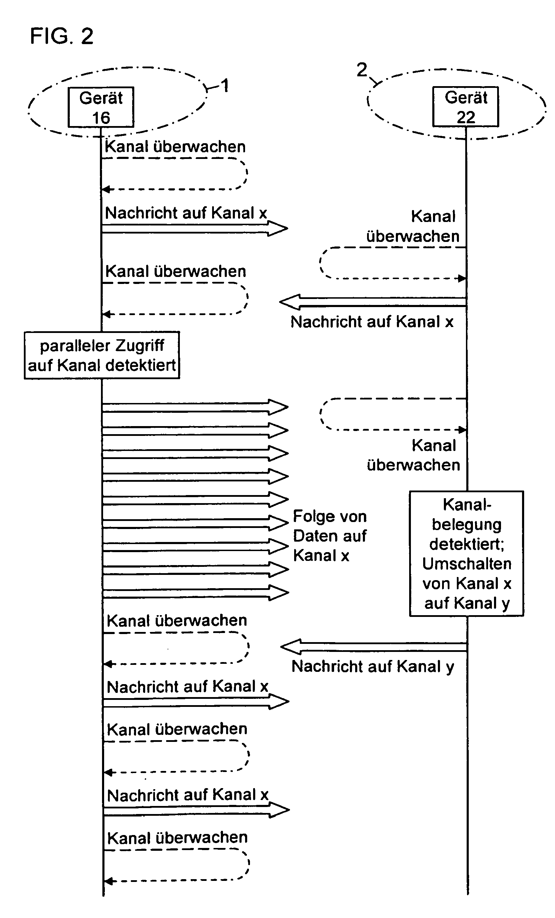

Wie Figur 2 zeigt, kommuniziert das Gerät 16 in dem ersten Funknetz 1 sporadisch in dem Frequenzkanal x und überwacht in den Pausen dazwischen, ob ein nicht zu dem Netz 1 gehörendes Gerät versucht, den Frequenzkanal x zu belegen. Wenn das Gerät 22 des neu zu bildenden Funknetzes 2 aktiviert wird, versucht es, einen freien Frequenzkanal zu finden. Dabei kann es geschehen, dass das Gerät 22 zu diesem Zeitpunkt den Frequenzkanal x als frei vorfindet, weil in dem bestehenden Netz 1 gerade keine Daten übertragen werden. Sobald aber das Gerät 22 versucht, den Frequenzkanal x zu belegen, wird dies von dem Gerät 16 in dem ersten Netz detektiert, das daraufhin durch Senden einer Folge von Daten eine zusätzliche Belegung des Frequenzkanals x vornimmt. Dies wird wiederum von dem Gerät 22 erkannt, das daraufhin auf einen anderen Frequenzkanal y umschaltet.

Die Einrichtung 26, 26', welche die Funktionalität der Überwachung des Frequenzkanals x des bestehenden Netzes 1 und die Funktionalität der zusätzlichen Belegung des Frequenzkanals x beinhaltet, kann alle oder einzelne Geräte des bestehenden Netzes 1 oder extra dafür vorgesehene separate Geräte umfassen. So kann beispielsweise der Versuch einer Fremdbelegung des benutzten Frequenzkanals x von den jeweils aktiven Geräten, z. B. 16, des Netzes 1 detektiert und an ein separates Gerät 27 gemeldet werden, dass dann die zusätzliche Belegung des Frequenzkanals x vornimmt.

## Patentansprüche

1. Funknetz (1) mit Daten übertragenden Geräten (11 bis 16), die für die Dauer der Datenübertragung einen von mehreren verfügbaren Frequenzkanälen (x, y) belegen, und mit einer Überwachungseinrichtung (26, 26'), die in Pausen zwischen den einzelnen Datenübertragungen den benutzten Frequenzkanal (x) zusätzlich belegt, **dadurch gekennzeichnet, dass** die Überwachungseinrichtung (26, 26') dazu ausgebildet ist, den belegten Frequenzkanal (x) auf den Versuch einer Belegung durch ein nicht zu dem Funknetz (1) gehörendes Gerät (22) zu überwachen und die zusätzliche Belegung des Frequenzkanals (x) in Abhängigkeit von der Detektion eines solchen Versuchs vorzunehmen.

2. Funknetz (1) nach Anspruch 1, **dadurch gekennzeichnet, dass** die Überwachungseinrichtung (26, 26') dazu ausgebildet ist, während der zusätzlichen Belegung die Sendeleistung zu erhöhen.

3. Funknetz (1) nach Anspruch 1 oder 2, **dadurch gekennzeichnet, dass** die Überwachungseinrichtung (26, 26') dazu ausgebildet ist, die Überwachung des Frequenzkanals (x) des bestehenden Netzes (1) in den Pausen zwischen einzelnen Datenübertragungen vorzunehmen.

4. Funknetz (1) nach einem der Ansprüche 1 bis 3, **dadurch gekennzeichnet, dass** die Funktionalität der Überwachung des belegten Frequenzkanals (x) auf den Versuch einer Belegung durch ein nicht zu dem Funknetz (1) gehörendes Gerät (22) und die Funktionalität der zusätzlichen Belegung des Frequenzkanals (x) in mindestens einem der Geräte (11 bis 16) des Funknetzes (1) implementiert sind.

5. Funknetz (1) nach einem der Ansprüche 1 bis 3, **dadurch gekennzeichnet, dass** die Funktionalität der Überwachung des belegten Frequenzkanals (x) auf den Versuch einer Belegung durch ein nicht zu dem Funknetz (1) gehörendes Gerät (22) in mindestens einem der Geräte (11 bis 16) des Funknetzes (1) und die Funktionalität der zusätzlichen Belegung des Frequenzkanals (x) in einem zu dem Funknetz (1) separaten Gerät (27) implementiert ist.

6. Funknetz (1) nach einem der Ansprüche 1 bis 3, **dadurch gekennzeichnet, dass** die Funktionalität der Überwachung des belegten Frequenzkanals (x) auf den Versuch einer Belegung durch ein nicht zu dem Funknetz (1) gehörendes Gerät (22) in einem zu dem Funknetz (1) separaten Gerät (27) und die Funktionalität der zusätzlichen Belegung des Frequenzkanals (x) in mindestens einem der Geräte (11 bis 16) des Funknetzes (1) implementiert ist.

7. Funknetz (1) nach einem der Ansprüche 1 bis 3, **dadurch gekennzeichnet, dass** die Funktionalität der Überwachung des belegten Frequenzkanals (x) auf den Versuch einer Belegung durch ein nicht zu dem Funknetz (1) gehörendes Gerät (22) und die Funktionalität der zusätzlichen Belegung des Frequenzkanals (x) in einem zu dem Funknetz (1) separaten Gerät (27) implementiert sind.

8. Verfahren zur Datenübertragung in einem Funknetz (1), wobei Daten übertragende Geräte (11 bis 16) des Funknetzes (1) für die Dauer der Datenübertragung einen von mehreren verfügbaren Frequenzkanälen (x, y) belegen und in Pausen zwischen den einzelnen Datenübertragungen der benutzte Frequenzkanal (x) zusätzlich belegt wird, **dadurch gekennzeichnet, dass** der belegte Frequenzkanal (x) auf den Versuch einer Belegung durch ein nicht zu dem Funknetz (1) gehörendes Gerät (22) überwacht wird und die zusätzliche Belegung des Frequenzkanals (x) in Abhängigkeit von der Detektion eines solchen Versuchs erfolgt.

9. Verfahren nach Anspruch 8, **dadurch gekennzeichnet, dass** während der zusätzlichen Belegung die Sendeleistung erhöht wird.

10. Verfahren nach Anspruch 8 oder 9, **dadurch gekennzeichnet, dass** die Überwachung des Frequenzkanals (x) des bestehenden Netzes (1) in den Pausen zwischen einzelnen Datenübertragungen erfolgt.

## Claims

1. Radio network (1) comprising devices (11 to 16) transmitting data, which seize one of a number of available frequency channels (x, y) for the duration of the data transmission and comprising a monitoring facility (26, 26'), which additionally seizes the used frequency channel (x) during pauses between the individual data transmissions, **characterised in that** the monitoring facility (26, 26') is embodied to monitor the seized frequency channel (x) for an attempted seizure by a device (22) which does not belong to the radio network (1) and to perform the additional seizure of the frequency channel (x) as a function of the detection of such an attempt.

2. Radio network (1) according to claim 1, **characterised in that** the monitoring facility (26, 26') is embodied to increase the transmission power during the additional seizure.

3. Radio network (1) according to claim 1 or 2, **characterised in that** the monitoring facility (26, 26') is embodied to perform the monitoring of the frequency channel (x) of the existing network (1) during the pauses between individual data transmissions.

4. Radio network (1) according to one of claims 1 to 3, **characterised in that** the functionality of the monitoring of the seized frequency channel (x) for an attempted seizure by a device (22) which does not belong to the radio network (1) and the functionality of the additional seizure of the frequency channel (x) are implemented in at least one of the devices (11 to 16) of the radio network (1).

5. Radio network (1) according to one of claims 1 to 3, **characterised in that** the functionality of the monitoring of the seized frequency channel (x) for an attempted seizure by a device (22) which does not belong to the radio network (1) is implemented in at least one of the devices (11 to 16) of the radio network (1) and the functionality of the additional seizure of the frequency channel (x) is implemented in a device (27) which is separate from the radio network (1).

6. Radio network (1) according to one of claims 1 to 3, **characterised in that** the functionality of the monitoring of the seized frequency channel (x) for an attempted seizure by a device (22) which does not belong to the radio network (1) is implemented in a device (27) which is separate from the radio network (1) and the functionality of the additional seizure of the frequency channel (x) is implemented in at least one of the devices (11 to 16) in the radio network (1).

7. Radio network (1) according to one of claims 1 to 3, **characterised in that** the functionality of the monitoring of the seized frequency channel (x) for an attempted seizure by a device (22) which does not belong to the radio network (1) and the functionality of the additional seizure of the frequency channel (x) are implemented in a device (27) which is separate from the radio network (1).

8. Method for transmitting data in a radio network (1), with devices (11 to 16) of the radio network (1) transmitting data seizing one of several available frequency channels (x, y) for the duration of the data transmission and the used frequency channel (x) also being seized during pauses between the individual data transmissions, **characterised in that** the seized frequency channel (x) is monitored for an attempted seizure by a device (22) which does not belong to the radio network (1) and the additional seizure of the frequency channel (x) takes place as a function of the detection of such an attempt.

9. Method according to claim 8, **characterised in that** the transmission power is increased during the additional seizure.

10. Method according to claim 8 or 9, **characterised in that** the frequency channel (x) of the existing network (1) is monitored in pauses between individual data transmissions.

## Revendications

1. Réseau ( 1 ) de radiocommunication, comprenant des appareils ( 11 à 16 ) de transmission de données, qui occupent pendant la durée de la transmission de données, l'un de plusieurs canaux ( x, y ) de fréquence disponibles et comprenant un dispositif ( 26, 26' ) de contrôle, qui occupe supplémentairement le canal ( x ) de fréquence utilisé dans les intervalles entre les diverses transmissions de données, **caractérisé en ce que** le dispositif ( 26, 26' ) de contrôle est tel qu'il contrôle le canal ( x ) de fréquence occupé, sur le point de savoir qu'un appareil ( 22 ) n'appartenant pas au réseau (1) de radiocommunication essaie de l'occuper et effectue l'occupation supplémentaire du canal (x) de fréquence en fonction de la détection d'un tel essai.

2. Réseau ( 1 ) de radiocommunication suivant la revendication 1, **caractérisé en ce que** le dispositif ( 26, 26' ) de contrôle est tel, qu'il augmente la puissance d'émission pendant l'occupation supplémentaire.

3. Réseau ( 1 ) de radiocommunication suivant la revendication 1 ou 2, **caractérisé en ce que** le dispositif ( 26, 26' ) de contrôle est tel, qu'il effectue le contrôle du canal ( x ) de fréquence du réseau ( 1 ) existant dans les intervalles entre des transmissions de données individuelles.

4. Réseau ( 1 ) de radiocommunication suivant l'une des revendications 1 à 3, **caractérisé en ce que** la fonctionnalité du contrôle du canal ( x ) de fréquence occupé, sur le point de savoir si un appareil (22) n'appartenant pas au réseau ( 1 ) de télécommunication, essaie une occupation et la fonctionnalité de l'occupation supplémentaire du canal (x) de fréquence sont mises en oeuvre dans au moins l'un des appareils ( 11 à 16 ) du réseau ( 1 ) de radiocommunication.

5. Réseau (1) de radiocommunication suivant l'une des revendications 1 à 3, **caractérisé en ce que** la fonctionnalité du contrôle du canal ( x ) de fréquence occupé, sur le point de savoir si un appareil ( 22 ) n'appartenant pas au réseau ( 1 ) de radiocommunication essaie une occupation, est mise en oeuvre dans au moins l'un des appareils ( 11 à 16 ) du réseau ( 1 ) de radiocommunication et la fonctionnalité de l'occupation supplémentaire du canal (x) de fréquence est mise en oeuvre dans un appareil ( 27 ) séparé du réseau ( 1 ) de radiocommunication.

6. Réseau ( 1 ) de radiocommunication suivant l'une des revendications 1 à 3, **caractérisé en ce que** la fonctionnalité du contrôle du canal ( x ) de fréquence occupé, sur le point de savoir si un appareil (22) n'appartenant pas au réseau ( 1) de radiotélécommunication essaie une occupation, est mise en oeuvre dans un appareil ( 27 ) séparé du réseau ( 1 ) de radiocommunication et la fonctionnalité de l'occupation supplémentaire du canal ( x ) de fréquence est mise en oeuvre dans au moins l'un des appareils ( 11 à 16 ) du réseau ( 1 ) de radiocommunication.

7. Réseau ( 1 ) de radiocommunication suivant l'une des revendications 1 à 3, **caractérisé en ce que** la fonctionnalité du contrôle du canal ( x ) de fréquence occupé, sur le point de savoir si un appareil ( 22 ) n'appartenant pas au réseau ( 1 ) de radiocommunication essaie une occupation et la fonctionnalité de l'occupation supplémentaire du canal (x) de fréquence sont mises en oeuvre dans un appareil (27) séparé du réseau ( 1 ) de radiocommunication.

8. Procédé de transmission de données dans un réseau ( 1 ) de radiocommunication, des appareils ( 11 à 16 ) du réseau ( 1 ) de radiocommunication transmettant des données occupant, pendant la durée de la transmission de données, l'un de plusieurs canaux (x, y) de fréquence disponibles et, dans les intervalles entre les diverses transmissions de données, le canal ( x ) de fréquence utilisé étant occupé supplémentairement, **caractérisé en ce qu'**on contrôle le canal ( x ) de fréquence occupé sur le point de savoir si un appareil ( 22 ) n'appartenant pas au réseau (1) de radiocommunication essaie une occupation et on effectue l'occupation supplémentaire du canal (x) de fréquence en fonction de la détection d'un essai de ce genre.

9. Procédé suivant la revendication 8, **caractérisé en ce que** l'on augmente la puissance d'émission pendant l'occupation supplémentaire.

10. Procédé suivant la revendication 8 ou 9, **caractérisé en ce qu'**on effectue le contrôle du canal (x) de fréquence du réseau ( 1 ) existant dans les intervalles entre des transmissions de données individuelles.
